Europäisches Patentamt

European Patent Office

Office européen des brevets

(19)

(11) **EP 0 907 213 B1**

(12) **FASCICULE DE BREVET EUROPEEN**

(45) Date de publication et mention
de la délivrance du brevet:
**22.10.2003 Bulletin 2003/43**

(51) Int Cl.⁷: **H01L 41/09**

(21) Numéro de dépôt: **98402182.4**

(22) Date de dépôt: **03.09.1998**

(54) **Perfectionnements aux moteurs à vibrations**

Verbesserungen an Vibrationswellenmotoren

Improvements related to vibration wave motors

(84) Etats contractants désignés:
**DE ES FR GB IT NL SE**

(30) Priorité: **03.09.1997 FR 9710948**

(43) Date de publication de la demande:
**07.04.1999 Bulletin 1999/14**

(73) Titulaire: **Sagem S.A.**
**75015 Paris (FR)**

(72) Inventeur: **Audren, Jean Thierry**
**78470 Saint Remy les Chevreuse (FR)**

(74) Mandataire: **Schrimpf, Robert**
**Cabinet Regimbeau**
**20, rue de Chazelles**
**75847 Paris cedex 17 (FR)**

(56) Documents cités:
**FR-A- 2 721 675**    **US-A- 4 714 855**
**US-A- 5 034 647**

## Description

La présente invention est relative aux moteurs à vibrations.

Les moteurs à vibrations sont également connus sous le nom de moteurs ultrasonores pour faire référence à leur fréquence préférée d'utilisation ou de moteurs piézoactifs pour faire référence à leur matériau d'excitation préféré.

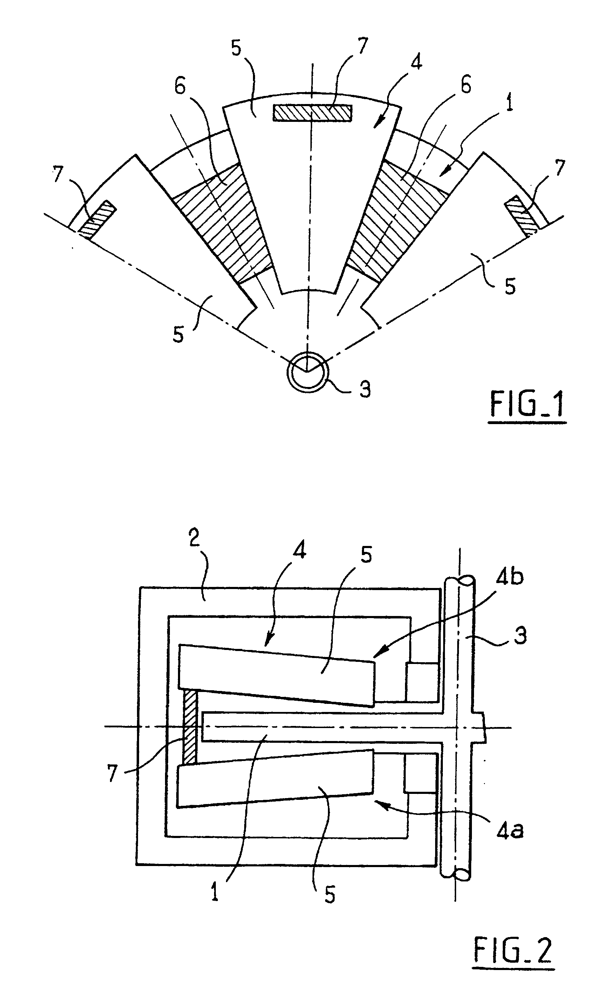

Le principe d'un exemple possible pour un moteur à vibrations a été schématiquement illustré sur les figures 1 et 2.

Le moteur illustré sur ces figures comporte un disque de rotor 1 monté rotatif sur un bâti 2 autour d'un axe 3.

Il comporte également un stator 4 qui entraîne le rotor 1 en mouvement par une combinaison d'une déformation cyclique tangentielle de sa surface de contact avec le rotor et d'une force synchrone perpendiculaire.

Dans l'exemple illustré sur les figures 1 et 2, le stator comporte deux plateaux 4a, 4b disposés de part et d'autre du disque de rotor 1. Chacun de ces deux plateaux 4a, 4b est constitué d'une pluralité de secteurs de contact 5 régulièrement répartis, entre lesquels sont intercalés des éléments actifs 6, qui écartent ou rapprochent de façon cyclique lesdits secteurs de contact 5. Ces éléments actifs 6 sont par exemple de type piézoélectrique, magnétostrictif ou électrostrictif.

Les secteurs de contact 5 des deux plateaux 4a, 4b sont exactement superposés. Les secteurs de contact 5 des deux plateaux 4a, 4b qui sont en regard sont reliés par des éléments actifs 7 interposés entre lesdits plateaux. Ces éléments actifs 7 se déforment de façon cyclique pour que lesdits secteurs de contact 5 viennent successivement pincer, puis relâcher le disque du rotor 1.

La combinaison de la déformation tangentielle créée par les éléments actifs 6 et de la force normale créée par les éléments actifs 7 engendre par frottement une force moyenne non nulle permettant l'entraînement du rotor selon un mouvement de rotation continu.

Les moteurs à vibrations présentent de nombreux avantages.

Notamment, ils présentent des caractéristiques de couple élevé pour des vitesses de rotation faibles. Il en résulte que pour de nombreuses applications, ils ne nécessitent pas ou peu de réducteur, contrairement aux moteurs électriques traditionnels.

Egalement, les moteurs à vibrations présentent souvent des densités massiques de puissance bien meilleures que celles des motoréducteurs classiques (environ un rapport 3).

Toutefois, les puissances mécaniques que les moteurs à vibrations sont susceptibles de délivrer sont encore limitées à quelques dizaines de watts.

Un but de l'invention est de proposer une structure de moteur à vibrations capable de produire une puissance nettement plus élevée que celle produite par les moteurs à vibrations actuels et ce en conservant les avantages de légèreté des moteurs à vibrations, même pour des puissances élevées, sans pour autant augmenter de façon trop importante leur volume.

A cet effet, l'invention propose un moteur à vibrations, caractérisé en ce qu'il comporte dans une carcasse au moins deux paires de plateaux statoriques qui comprennent des éléments actifs de déformation tangentielle, ainsi qu'au moins deux disques de rotor qui sont agencés de telle sorte que les deux plateaux de chacune des paires (14, 15) sont disposés respectivement de part et d'autre de chacun des disques de rotor, des éléments actifs pour la génération d'un effort normal s'étendant entre les plateaux de l'une et l'autre de deux paires qui sont en regard, des moyens formant ressort étant interposés entre lesdites paires de plateaux et la carcasse.

Avec une telle configuration de moteurs, les surfaces de contact des plateaux statoriques sur les disques de rotor sont maximales et le couplage mécanique est optimal.

Une telle structure présente en outre l'avantage de minimiser les phénomènes d'usures.

D'autres caractéristiques et avantages de l'invention ressortiront encore de la description qui suit qui est purement illustrative et non limitative et doit être lue en regard des dessins annexés sur lesquels :

- la figure 1 est une représentation schématique de principe en vue de dessus partielle d'un moteur à vibration ;
- la figure 2 est une représentation schématique en coupe axiale partielle du moteur de la figure 1 ;
- la figure 3 est une représentation schématique en coupe axiale d'un moteur à vibration conforme à un mode de réalisation possible de l'invention ;
- la figure 4 illustre la cinématique des différents éléments du moteur de la figure 3 ;
- la figure 5 est une représentation en perspective d'un plateau statorique conforme à un mode de réalisation préféré de l'invention ;
- la figure 6 est une représentation en perspective éclatée d'un moteur conforme à un mode de réalisation possible de l'invention.

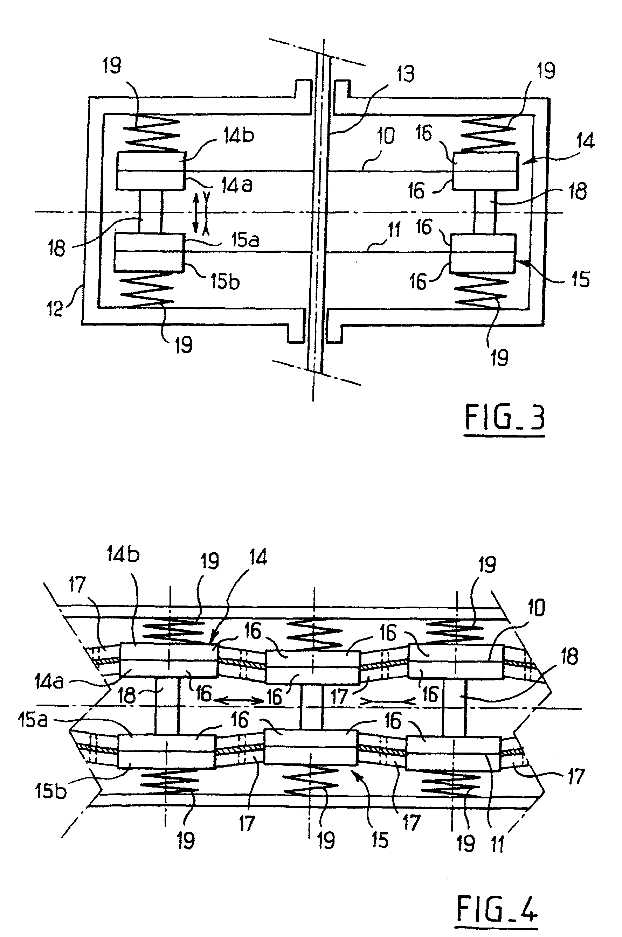

Le moteur à vibrations illustré sur les figures 3 et 4 comporte deux disques de rotor 10, 11 et deux paires 14, 15 de plateaux statoriques coopérant respectivement avec lesdits disques 10, 11.

Les deux disques de rotor 10, 11 sont des disques flexibles, solidaires d'un même arbre 13 par lequel ils sont montés rotatifs par rapport à une carcasse 12.

Le rotor 10 s'étend entre les deux plateaux statoriques - référencés par 14a, 14b - de la paire 14 ; le rotor 11 s'étend quant à lui entre les deux plateaux statoriques - référencés par 15a, 15b - de la paire 15.

Les deux plateaux 14a, 15a sont les deux plateaux statoriques des deux paires 14, 15 qui sont en regard et sont appelés par la suite plateaux intérieurs, les deux plateaux 14b, 15b étant quant à eux appelés plateaux extérieurs.

Chaque plateau statorique 14a, 14b, 15a et 15b est constitué d'une pluralité de secteurs de contact 16 qui sont répartis annulairement et qui sont séparés deux à deux par des éléments actifs de déformation tangentielle 17.

Ces secteurs de contact 16 sont métalliques. Ils présentent avantageusement, ainsi que cela a été proposé par la demanderesse dans sa demande de brevet français FR 2 742 011 A1, au moins une zone en un alliage à mémoire de forme à proximité de leur surface de contact.

Les secteurs de contact 16 des deux plateaux intérieurs 14a, 15a sont au droit les uns des autres. Des éléments actifs 18 pour la génération d'une force normale sont interposés entre les secteurs 16 de ces deux plateaux intérieurs 14a, 15a.

Des moyens 19 formant ressort sont interposés entre la carcasse 12 et les secteurs de contact 16 des plateaux extérieurs 14b, 15b.

Lorsqu'un élément actif 18 s'allonge, les secteurs de contact 16 au droit desquelles il est disposé viennent pincer les disques de rotor 10, 11. Lorsqu'il se rétracte, les secteurs de contact 16 qui lui correspondent relâchent les disques 10, 11.

Les moyens 19 sont d'une raideur faible, mais avec une élongation suffisante pour assurer le maintien en pression des secteurs de contact 16 sur les disques de rotor, lorsqu'ils sont comprimés par l'allongement des éléments actifs 18.

Les éléments actifs 17 et/ou les éléments actifs 18 présentent avantageusement des structures multi-couches intégrant en parallèle ou en série des couches en céramique de type piézo-électrique, magnétostrictif ou électrostrictif et des couches métalliques. Une telle structure multi-couches présente l'avantage de permettre l'utilisation de tensions faibles.

Deux éléments actifs 17 de part et d'autre d'un même secteur 16 sont excités en opposition de phase. De même, deux éléments actifs 18 voisins sont également excités en opposition de phase.

Les éléments actifs 18 pour la génération d'un effort normal sont par exemple commandés avec une même fréquence d'excitation que les éléments actifs 17 de déformation tangentielle.

Les disques 10 et 11 et les paires de plateaux statoriques 14, 15 vont par conséquent osciller en se déformant de la façon qui est illustrée sur la figure 4.

Les moyens 19 formant ressort permettent de maintenir les plateaux statoriques 14a, 15a, 14b, 15b en pression sur les disques de rotor 10 et 11 et permettent de récupérer les jeux et les variations de côtes.

Ainsi, avec une configuration du type de celle qui vient d'être décrite, l'effet de pince est créé par inertie des deux paires de plateaux statoriques 14, 15.

En outre, cette configuration présente l'avantage d'être tolérante à l'usure du rotor et du stator, ainsi qu'à certains défauts de construction.

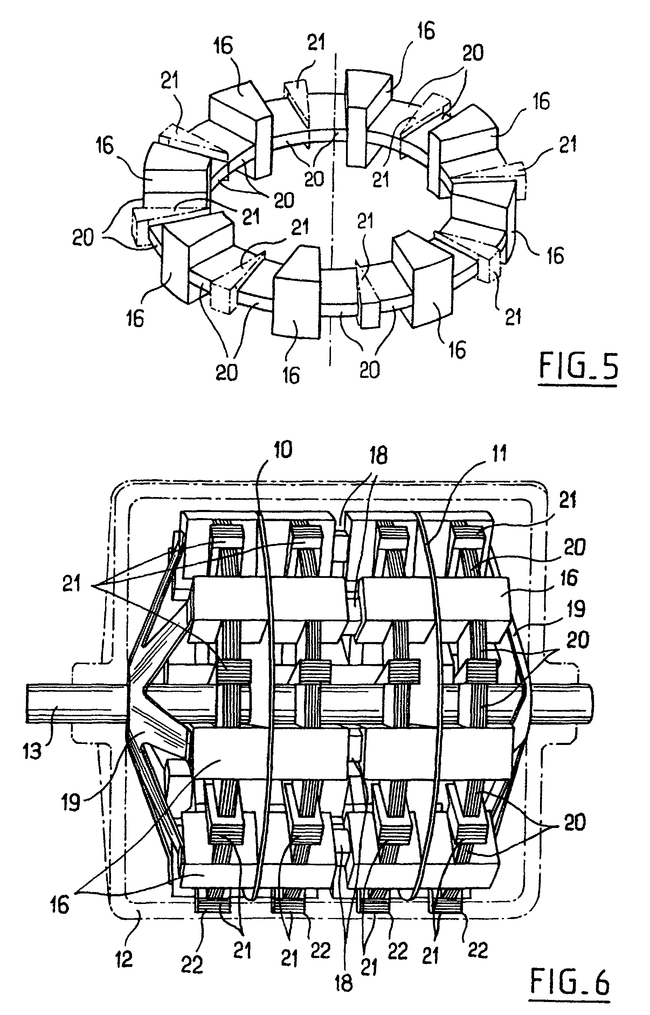

Une configuration de plateau statorique préférée a été illustrée sur les figures 5 et 6.

Dans cette configuration, les éléments actifs 17 de déformation tangentielle entre deux secteurs de contact 16 successifs sont constitués chacun de deux céramiques parallélépipèdiques 20 entre lesquelles est interposé un coin 21 de forme triangulaire en un matériau métallique.

On notera que la forme parallélépipèdique des céramiques 20 permet de minimiser leur coût.

Les dimensions du coin 21 sont optimisées de telle manière que le mouvement vibratoire des secteurs de contact 16 soit sensiblement circulaire avec comme centre l'axe du rotor.

Par ailleurs, ainsi que le montre la figure 6, les coins 21 sont également utilisés pour l'attache des plateaux statoriques par rapport à la carcasse 12 du moteur. Ils constituent en effet des points de mouvement nul qui, s'ils sont utilisés comme points d'attache, permettre de ne pas transmettre les vibrations du moteur à la carcasse.

A cet effet, les coins 21 s'étendent en partie en saillie par rapport aux contours extérieurs des plateaux statoriques 14a, 14b et 15a, 15b. Les portions en saillie des coins 21 coopèrent avec des renfoncements 22 de forme complémentaire que présente la face intérieure de la carcasse 12 et dans lesquels lesdites portions sont reçues.

Dans l'exemple illustré sur la figure 6, les moyens 19 formant ressort sont des rondelles à pattes élastiques dont les parties centrales sont en appui sur le fond de la carcasse 12, tandis que les extrémités de leurs pattes sont en appui sur les secteurs 16 des plateaux statoriques 14b, 15b extérieurs.

A titre d'exemple, un dimensionnement possible peut être le suivant pour les plateaux statoriques.

Le rayon intérieur est de 50 mm, tandis que le rayon extérieur défini par les secteurs 16 et les céramiques parallélépipédiques 20 est de 75 mm.

Le nombre de secteurs 16 est de huit.

Les céramiques 18 et 20 sont en PZT.

Les céramiques 20 présentent une épaisseur au repos de 5,8 mm, une largeur radiale de 25 mm et une largeur circonférentielle de 15,6 mm.

Les secteurs 16 présentent une épaisseur de 28 mm.

Le rayon extérieur des coins 21 est par exemple de 76-mm, leur épaisseur étant de 6 mm.

L'amplitude du débattement tangentiel des éléments 17 est de 13 $\mu$m.

Les éléments 18 présentent une épaisseur (dans la hauteur du moteur) de 6,6 mm, pour une section de 10*10 mm2. L'amplitude de débattement des éléments 18 est de 4,6 $\mu$m.

La fréquence de fonctionnement d'un tel moteur est de 20 kHz, pour une vitesse de rotation à vide de 17 rd/s et une vitesse de rotation en charge de 9,3 rd/s.

La pression tangentielle exercée par les céramiques 20 sur les secteurs 16 est de 1,5 MPa ; la pression normale exercée par les éléments 18 est de 7,6 MPa.

On notera qu'une telle configuration ne nécessite pas pour les disques de rotor 10, 11 une épaisseur importante. Par exemple, les disques 10 et 11 sont en acier et présentent une épaisseur de 1 mm.

La puissance en sortie de ce moteur est de 4 kW, sa masse totale étant de 5 kg.

La structure proposée par l'invention trouve de nombreuses applications. Notamment, elle est avantageusement utilisée pour la mise en mouvement d'une surface aérodynamique de pilotage d'un aéronef.

D'autres variantes de réalisation que celle qui vient d'être décrite peuvent bien entendu être envisagées. En particulier, étant donné que les forces de résonance normale ne travaillent pas, il n'est pas nécessaire que le couplage du mode normal soit très important. Les éléments 18 qui constituent la structure résonnante normale peuvent par conséquent être configurés et dimensionnés en fonction de nombreuses considérations : minimisation des pertes, accord des fréquences de résonance normale et tangentielle, résistance à la température, etc.

Dans ce qui suit, on s'intéresse à la précontrainte du matériau piézo-électrique.

La valeur minimale nécessaire de la précontrainte $\sigma p$ du matériau piézo-électrique pour qu'il n'y ait pas de contrainte de traction est :

$$E \frac{2x_n}{l}$$

l = Longueur du matériau E = Module d'Young $X_n$ = Amplitude d'oscillation normale de chacun des pétales métalliques 6.

On doit également avoir :

$$\sigma p + E \frac{2x_n}{l} \leq \sigma_{max}$$

$\sigma_{max}$ = contrainte maximale en compression.

D'autre part la fréquence F de résonance normale d'un élément actif 18 définit la raideur K dudit élément actif 18 tel que

$$K = (2\pi F)^2 \frac{M}{2}$$

où M est la masse de chaque côté d'un élément piézo-électrique 18, incluant celle des pétales métalliques 16 et des portions des disques 10 et 11 qui se trouvent au droit de cet élément 18.

De plus, $\Delta U$ la valeur maximale de la partie oscillante de la force d'appui rotor/stator est :

$$\Delta U = \frac{M}{2} (2\pi F)^2 x_n$$

Pour que le rotor et le stator restent constamment en appui, les ressorts de précontrainte doivent produire une force statique $U_o$ supérieure ou égale à $\Delta U$. D'autre part, il n'est pas intéressant que cette force soit nettement supérieure à $\Delta U$ car elle provoque une chute du rendement du moteur. Il est donc souhaitable que $U_o$ soit pratiquement égale à $\Delta U$.

Si l'on désire pour simplifier la construction mécanique, que cette force $U_o$ assure également la précontrainte de la céramique, on doit avoir

$$\frac{U_o}{S} = \sigma p$$

ce qui, tout calcul fait donne :

$$\sigma p = E \frac{x_n}{l}$$

On voit donc qu'il n'est pas possible de satisfaire la première relation

$$\sigma p \geq E \frac{2x_n}{l}$$

Pour résoudre ce problème, une première solution consisterait à réaliser l'élément de raideur K à l'aide de deux matériaux en parallèle, l'un piézo-électrique, l'autre métallique. Le métal peut, de par des capacités de tenue en traction, assurer la partie de précontrainte manquante. Bien que cette solution soit réalisable, elle présente des inconvénients de fabrication pour deux raisons principales :

- pour assurer la précontrainte le métal doit être ancré solidement dans les masses ou former une petite boite encapsulant le matériau piézo-électrique; cette petite boite doit être fermée en précontrainte et limite sévèrement l'accès au matériau piézo-électrique nécessaire au câblage ;
- il n'est pas aisé de maintenir la précontrainte constante en fonction de la température sauf en concevant la partie métallique nettement plus souple que la partie piézo-électrique en l'entourant ou en lui donnant une forme ondulée.

La solution proposée dans l'invention tire partie de la souplesse d'interface rotor-stator.

La demande de brevet FR 2 742 011 A1 explique l'intérêt de cette souplesse pour améliorer le rendement de conversion des vibrations en mouvement continu à l'aide de champ de pions métalliques. Il existe une latitude de choix de la raideur normale k de cette structure d'interface.

Selon un aspect de la présente invention, il est proposé de choisir cette raideur d'interface de façon à résoudre le problème de la précontrainte du matériau piézo-électrique.

On remarque d'abord que l'oscillateur mécanique décrit en référence aux figures 3 à 6 peut être actionné selon deux modes de vibrations normales différents.

Dans le premier mode, les pétales métalliques 16 de part et d'autre du disque 10 (respectivement 11) sont excités en phase entre eux et en opposition de phase par rapport aux pétales de part et d'autre de l'autre disque du rotor, c'est-à-dire du disque 11 (respectivement 10).

Ce mode d'excitation correspond à celui qui était décrit dans la demande FR 97 10948 et à une fréquence de résonance de

$$F_1 = \frac{1}{2\pi} \sqrt{\frac{2K}{M} + \frac{2k}{M} - \sqrt{\frac{4K^2}{M^2} + \frac{4k^2}{M^2}}}$$

Toutefois, un second mode d'excitation est envisageable : dans ce second mode, les masses de part et d'autre d'un même disque 1a, 1b du rotor sont excitées en opposition de phase, tandis que les masses de part d'autre d'un élément actif sont également en opposition de phase.

La fréquence de ce deuxième mode est :

$$F_2 = \frac{1}{2\pi} \sqrt{\frac{2K}{M} + \frac{2k}{M} - \sqrt{\frac{4K^2}{M^2} + \frac{4k^2}{M^2}}}$$

Ces deux fréquences encadrent la fréquence

$$F = \frac{1}{2\pi} \sqrt{\frac{2K}{M}} = F$$

définie précédemment et qui peut être retrouvée dans le formule de F1 en faisant tendre k vers l'infini.

on voit que pour une valeur $F_o$ donnée de fréquence de résonance, les termes complémentaires sous le radical permettent, en travaillant avec le deuxième mode propre des vibrations, de choisir une valeur de K plus faible pour la même valeur de $F_o$. Il devient alors possible de choisir, dans $K = \frac{ES}{l}$, S plus petit ou l plus grand et de satisfaire à l'exigence de la précontrainte dans le matériau piézo-électrique.

## Revendications

1. Moteur à vibrations, **caractérisé en ce qu'**il comporte dans une carcasse au moins deux paires de plateaux statoriques (14, 15) qui comprennent des éléments actifs de déformation tangentielle, ainsi qu'au moins deux disques de rotor (10, 11) qui sont agencés de telle sorte que les deux plateaux de chacune des paires (14, 15) sont disposés respectivement de part et d'autre de chacun des disques de rotor, des éléments actifs (18) pour la génération d'un effort normal s'étendant entre les plateaux de l'une et l'autre de deux paires qui sont en regard, des moyens (19) formant ressort étant interposés entre lesdites paires de plateaux et la carcasse (12).

2. Moteur à vibrations selon la revendication 1, **caractérisé en ce qu'**un plateau statorique (14a, 14b ; 15a, 15b) est un anneau qui comprend une pluralité de secteurs de contact métalliques (16) qui sont répartis annulairement et qui sont séparés deux à deux par des éléments actifs (17) de déformation tangentielle.

3. Moteur à vibrations selon la revendication 2, **caractérisé en ce que** les éléments actifs (18) pour la génération d'un effort normal s'étendent entre les secteurs de contact (16) des plateaux de l'une et l'autre de deux paires qui sont en regard.

4. Moteur à vibrations selon l'une des revendications précédentes, **caractérisé en ce que** les éléments actifs de déformation tangentielle (17) et/ou les éléments actifs pour la génération d'un effort normal (18) comportent une ou plusieurs couches en céramique de type piézo-électrique, magnétostrictif ou électrostrictif en parallèle ou en série avec une ou plusieurs couches métalliques.

5. Moteur à vibrations selon les revendications 3 et 4 prises en combinaison, **caractérisé en ce qu'**un élément actif de déformation tangentielle (17) interposé entre deux secteurs de contact (16) comporte deux éléments en céramique (20) de forme parallélépipédique entre lesquels est interposé un coin métallique (21).

6. Moteur à vibrations selon la revendication 5, **caractérisé en ce que** les coins métalliques (21) coopèrent avec la carcasse (12) pour la fixation des plateaux statoriques sur ladite carcasse (12).

7. Moteur à vibrations selon la revendication 6, **caractérisé en ce que** les coins métalliques (21) présentent des portions en saillie par rapport au contour annulaire extérieur principal des plateaux statoriques et coopèrent avec des renfoncements (22) de forme complémentaire que la face intérieure de la carcasse présente et dans lesquels lesdites portions sont reçues.

8. Moteur selon l'une des revendications précédentes, **caractérisé en ce que** les moyens (19) formant ressort sont des rondelles à pattes élastiques interposées entre le fond de la carcasse et les plateaux statoriques (14b, 15b).

9. Moteur selon l'une des revendications précédentes, **caractérisé en ce que** les éléments actifs pour la génération d'un effort normal sont excités de façon que les masses de part et d'autre d'un même disque de rotor sont en opposition de phase et les masses de part et d'autre de l'élément actif sont également en opposition de phase, les éléments actifs étant dimensionnés de façon à vérifier les conditions de précontrainte.

10. Moteur pour la mise en mouvement d'une surface aérodynamique de pilotage d'un aéronef, **caractérisé en ce qu'**il est constitué par un moteur à vibrations selon l'une des revendications précédentes.

**Patentansprüche**

1. Schwingungswellenmotor, **dadurch gekennzeichnet, daß** er in einem Gehäuse wenigstens zwei Paare an Statorplatten (14, 15) aufweist, die aktive Tangentialdeformationselemente umfassen, sowie wenigstens zwei Rotorscheiben (10, 11), die derart angeordnet sind, daß die beiden Platten jedes der Paare (14, 15) an der einen Seite bzw. der anderen Seite jeder der Rotorscheiben angeordnet sind, aktive Elemente (18) zum Erzeugen einer Normalkraft, die sich zwischen den Platten des einen und des anderen von zwei sich gegenüberliegenden Paaren ausbreitet, und eine Federung bildende Mittel, die zwischen den Plattenpaaren und dem Gehäuse (12) angeordnet sind.

2. Schwingungswellenmotor nach Anspruch 1, **dadurch gekennzeichnet, daß** eine Startorplatte (14a, 14b; 15a, 15b) ein Ring ist, der mehrere metallische Kontaktbereiche (16) umfaßt, die ringförmig verteilt sind und die paarweise durch aktive Tangentialdeformationselemente (17) getrennt sind.

3. Schwingungswellenmotor nach Anspruch 2, **dadurch gekennzeichnet, daß** die aktiven Elemente (18) für die Erzeugung einer Normalkraft sich zwischen den Kontaktbereichen (16) der Platten des einen und des anderen von zwei sich gegenüberliegenden Paaren erstreckt.

4. Schwingungswellenmotor nach einem der vorhergehenden Ansprüche, **dadurch gekennzeichnet, daß** die aktiven Tangentialdeformationselemente (17) und/oder die aktiven Elemente für die Erzeugung einer Normalkraft (18) ein oder mehrere piezo-elektrische, magnetorestriktive oder elektrostriktive Keramikschichten parallel zu oder in Serie mit einer oder mehreren Metallschichten umfassen.

5. Schwingungswellenmotor nach den Ansprüchen 3 und 4, in Kombination, **dadurch gekennzeichnet, daß** ein aktives Tangentialdeformationselement (17), das zwischen zwei Kontaktbereichen (16) liegt, zwei quaderförmige Keramikelemente (20) umfaßt, zwischen denen ein Metallkeil (21) liegt.

6. Schwingungswellenmotor nach Anspruch 5, **dadurch gekennzeichnet, daß** die Metallkeile (21) mit dem Gehäuse (12) für die Befestigung der Statorplatten am Gehäuse (12) zusammenarbeiten.

7. Schwingungswellenmotor nach Anspruch 6, **dadurch gekennzeichnet, daß** die Metallkeile (21) bezüglich der äußeren ringförmigen Grundkontur der Statorplatten vorstehende Abschnitte aufweisen und mit komplementär geformten Vertiefungen (22) zusammenarbeiten, die die Innenseite des Gehäuse aufweist und in denen die Abschnitte aufgenommen sind.

8. Motor nach einem der vorhergehenden Ansprüche, **dadurch gekennzeichnet, daß** die eine Federung bildenden Mittel (19) Scheiben mit elastischen Beinen sind, die zwischen dem Boden des Gehäuses und den Statorplatten (14b, 15b) liegen.

9. Motor nach einem der vorhergehenden Ansprüche, **dadurch gekennzeichnet, daß** die aktiven Elemente für die Erzeugung einer Normalkraft derart erregt werden, daß die Massen beiderseits derselben Rotorscheibe sich in entgegengesetzter Phase befinden und die Massen beiderseits des aktiven Elements sich ebenfalls in entgegengesetzter Phase befinden, wobei die aktiven Elemente derart dimensioniert sind, daß sie die Vorspannungsbedingungen erfüllen.

10. Motor zum Versetzen einer aerodynamischen Luftsteueroberfläche eines Luftfahrzeuges in Bewegung, **dadurch gekennzeichnet, daß** er durch einen Schwingungswellenmotor nach einem der vorhergehenden Ansprüche gebildet ist.

**Claims**

1. Vibration motor, **characterized in that** it includes in a casing at least two pairs of stator plates (14, 15) which comprise tangential deformation active members, as well as at least two rotor discs (10, 11) that are arranged in such a way that the two plates of each of the pairs (14, 15) are disposed respectively on either side of each of the rotor discs, active members (18) for generating a normal force between the facing plates of both pairs and spring means (19) between said pairs of plates and the casing (12).

2. Vibration motor according to Claim 1, **characterized in that** a stator plate (14a, 14b; 15a, 15b) is a ring that comprises a plurality of metallic contact sectors (16) in an annular arrangement and separated in pairs by tangential deformation active members (17).

3. Vibrator motor according to Claim 2, **characterized in that** the active members (18) for generating a normal force extend between the contact sectors (16) of the facing plates of both pairs.

4. Vibration motor according to any one of the preceding claims, **characterized in that** the tangential deformation active members (17) and/or the active members for generating a normal force (18) comprise one or more piezo-electric, magnetostrictive or electrostrictive ceramic layers in parallel or in series with one or more metallic layers.

5. Vibration motor according to Claims 3 and 4 in conjunction, **characterized in that** a tangential deformation active member (17) between two contact sectors (16) includes two parallelpiped-shaped ceramic members (20) with a metal wedge (21) between them.

6. Vibration motor according to Claim 5, **characterized in that** the metallic wedges (21) cooperate with the casing (12) to fix the stator plates to said casing (12).

7. Vibration motor according to Claim 6, **characterized in that** the metal wedges (21) have portions projecting from the main outside annular contour of the stator plates and cooperate with recesses (22) of complementary shape on the inner face of the casing and in which said portions are received.

8. Motor according to any one of the preceding claims, **characterized in that** the spring means (19) are spring washers disposed between the back of the casing and the stator plates (14b, 15b).

9. Motor according to any one of the preceding claims, **characterized in that** the active members for generating a normal force are excited so that the masses on respective opposite sides of the same rotor discs are in antiphase and the masses on respective opposite sides of the active member are also in antiphase, the active members being dimensioned so as to comply with the prestressing conditions.

10. Motor for moving an aerodynamic control surface of an aircraft, **characterized in that** it is constituted by a vibration motor according to any one of the preceding claims.

FIG_1

FIG_2

FIG_3

FIG_4

FIG.5

FIG.6